# DEMANDE DE BREVET EUROPEEN

(11) **EP 0 878 347 A1**
(43) Date de publication de la demande: **18.11.1998**
(21) Numéro de dépôt: 98401166.8
(22) Date de dépôt: 15.05.1998
(51) Int. Cl.: B60N 2/28

(54) **Dispositif de support d'un siège de passager-enfant**

(30) Priorité: 16.05.1997 FR 9706034
(71) Demandeur: RENAULT, 92109 Boulogne-Billancourt (FR)
(72) Inventeur: Lallement, Stéphane, 77100 Mareuil les Meaux (FR)

(57) **Abrégé**

Dispositif de support d'un siège de passager-enfant qui possède une base d'appui (1) au contact de la surface de charge d'un siège de véhicule automobile et des moyens de retenue d'un module de siège de passager-enfant, caractérisé par le fait que le dispositif support possède des moyens de verrouillage (41,42) et des moyens de positionnement (9, 10, 11) du siège de passager-enfant, d'une part sur la base d'appui (1) et d'autre part sur une butée de dossier (2) solidaire de ladite base d'appui (1) à placer au contact du dossier du siège du véhicule.

## Description

L'invention concerne un dispositif de support d'un siège de passager-enfant.

L'invention concerne plus particulièrement un tel dispositif de support qui peut être posé sur un siège de véhicule et auquel est associé un module de siège de passager-enfant.

La publication EP-A-0417683 décrit un dispositif de support auquel est associé un module ajustable de siège de passager-enfant.

La publication FR-A-2713163 décrit un dispositif d'assise de siège de passager-enfant constitué par un élément réhausseur qui se prolonge vers l'amère par des bras latéraux porteurs de moyens de fixation aux éléments de l'armature d'un siège de véhicule.

La publication FR-A-2649367 décrit un dispositif de siège de passager-enfant équipé d'une armature qui possède des moyens de retenue avec lesquels coopèrent les sangles d'une ceinture de sécurité pour l'immobilisation dudit dispositif sur un siège de véhicule équipé de ladite ceinture de sécurité.

Le problème non résolu sur ces dispositifs réside dans le fait que le support ne peut être solidarisé avec le siège du véhicule indépendamment des moyens de retenue constitués par la ceinture de sécurité.

L'invention a pour objet de remédier à l'inconvénient précité et propose un support à montage rapide qui possède une base d'appui au contact de la surface de charge d'un siège du véhicule, et des moyens de retenue d'un module de siège de passager-enfant.

Selon l'invention le dispositif de support possède des moyens d'accrochage et des moyens de positionnement du siège de passager-enfant, d'une part sur la base d'appui et d'autre part sur une butée de dossier solidaire de ladite base d'appui, à placer au contact du dossier du siège du véhicule.

Le dispositif ainsi réalisé inclut un support de siège de passager-enfant de largeur réduite en correspondance avec celle de l'étendue de la surface de charge de l'assise et du dossier d'un siège de véhicule automobile.

Selon une autre caractéristique du support, ce dernier possède un ensemble de verrouillage au contact d'un support d'accrochage porté par exemple par l'axe d'articulation du dossier du siège du véhicule.

Selon une autre caractéristique du support, une butée articulée assure le blocage du support au contact du dossier d'un siège de véhicule, dans le but d'éviter le déverrouillage accidentel du support à la suite d'une forte décélération du véhicule.

D'autres caractéristiques et avantages du dispositif de support apparaîtront à la lecture de la description d'un exemple de réalisation de celui-ci en référence aux dessins annexés dans lesquels :
- la figure 1 est une représentation perspective du dispositif support
- la figure 2 est une représentation agrandie du détail de réalisation d'un ensemble de verrouillage et de rétention du dispositif support au contact d'un support d'accrochage
- la figure 3 est une représentation schématique de la répartition des organes de fixation sur le siège de passager-enfant
- les figures 4 et 5 sont les représentations à une plus grande échelle des organes de fixation du siège de passager-enfant représenté à la figure 3
- la figure 6 est une représentation perspective d'une variante de réalisation du dispositif support
- les figures 7 à 9 représentent schématiquement les principales orientations du siège de passager-enfant posé sur le dispositif de support, en fonction de l'âge de l'utilisateur dudit siège.

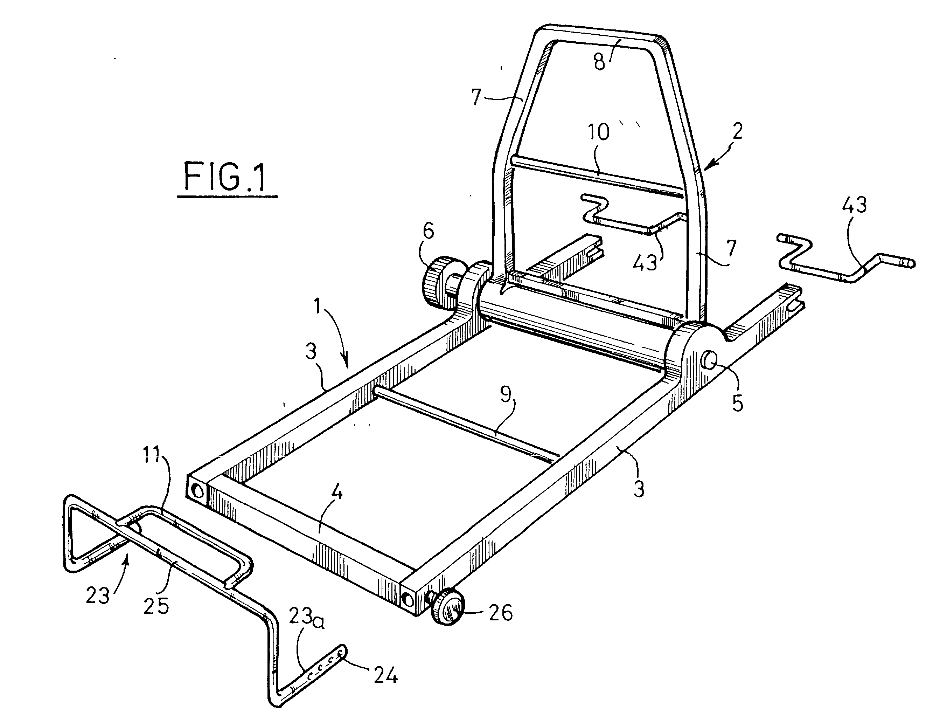

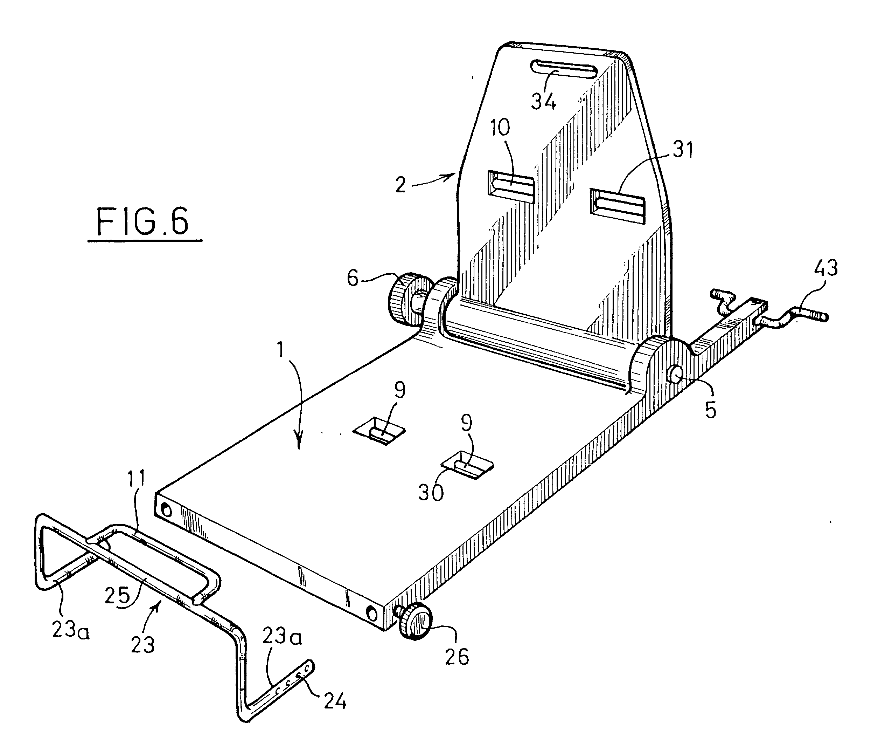

Le dispositif de support représenté aux figures 1 et 6 est constitué essentiellement par une base d'appui 1 et une butée de dossier 2.

La base d'appui 1 peut être réalisée à titre d'exemple montré à la figure 1 par une armature incluant des longerons 3 entretoisés par des traverses 4. La butée de dossier 2 est montée à articulation sur la base 1 autour d'un axe transversal 5 à l'aide d'un mécanisme de manoeuvre 6 localisé au voisinage de l'extrémité postérieure de la base 1.

La butée de dossier 2 comporte à titre d'exemple des montants 7 réunis par une traverse supérieure 8.

Les longerons 3 et montants 7 portent par ailleurs des barreaux de retenue et de positionnement 9, 10, 11 d'éléments de fixation 20 solidaires d'un châssis 21 d'un siège 22 de passager-enfant.

Le barreau de positionnement 11 du siège 22 est monté sur une butée ajustable 23 tubulaire de forme générale en U dont une branche 23a porte des crans d'ajustement 24. Les branches 23a sont respectivement montées à coulissement dans des perçages longitudinaux portés par les longerons 3 et immobilisées par un verrou de commande 26.

La butée 23 porte également une barre de préhension 25 susceptible de faciliter la manipulation et le portage du dispositif

Selon la variante de réalisation du dispositif représentée à la figure 6, la base d'appui 1 et la butée de dossier 2 sont constituées par des plaques d'appui percées de fenêtres d'encastrement 30, 31 dans lesquelles s'étendent les barreaux de positionnement 9, 10. La butée de dossier 2 possède par ailleurs une poignée de manoeuvre 34 destinée au transport du dispositif de support.

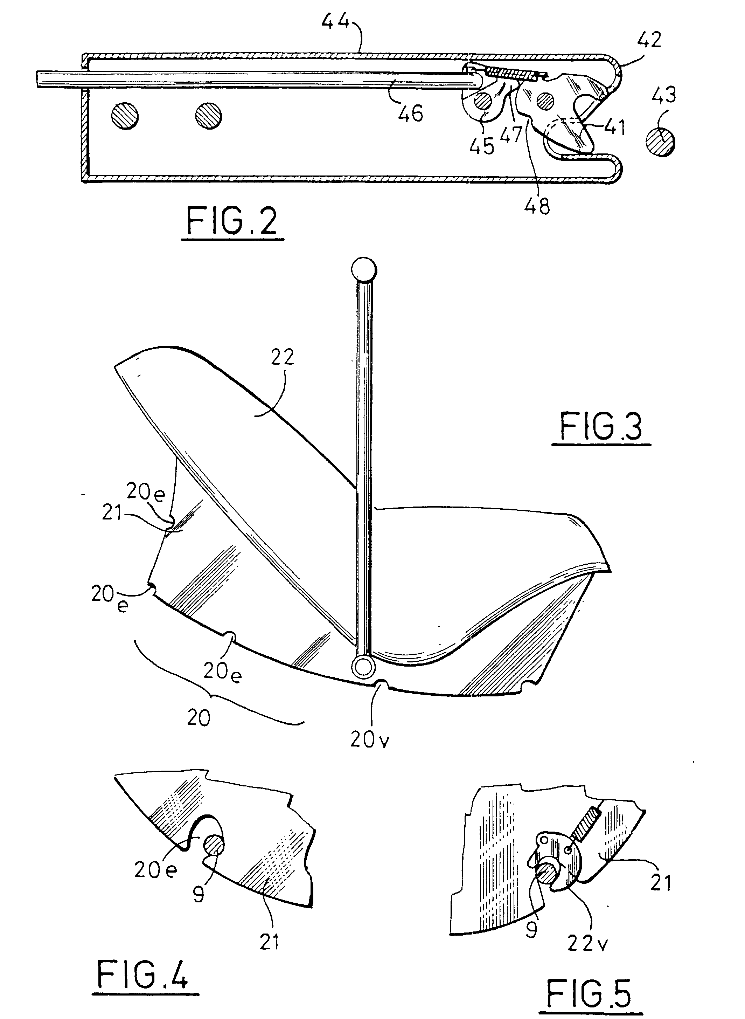

Dans le but d'assurer l'immobilisation du dispositif sur un siège 40 du véhicule, l'extrémité de la base d'appui 1, porte un ensemble de verrouillage représenté à la figure 2.

L'ensemble de verrouillage comporte un verrou mobile 41 articulé sur une fourche 42. Le verrou 41 est un verrou à ressort qui possède deux positions stables de déverrouillage et de verrouillage au contact d'un support d'accrochage 43.

Le support 43 peut être porté par le plancher du véhicule ou par le siège 40. Selon le mode de réalisation représenté, deux fourches 42 sont portées par des plaques de tôles 44 respectivement vissées latéralement à l'extrémité postérieure de la base d'appui 1.

Un cliquet de commande articulé 45 est attelé à une tige de manoeuvre 46 et porte un bec d'immobilisation 47 du verrou 41 au contact d'une encoche 48 dudit verrou.

La position correcte du siège 22 en fonction de l'âge du passager-enfant est assurée par la combinaison d'au moins deux barreaux de retenue 9, 11 ou 9, 10 avec des éléments de fixation 20 portés par le châssis 21 du siège 22. Ainsi que cela est montré aux figures 3 à 5, les moyens de fixation 20 sont répartis le long du châssis 21 du siège et sont constitués soit par des encoches 20e complétées cas par cas par un verrou 20v à ressort.

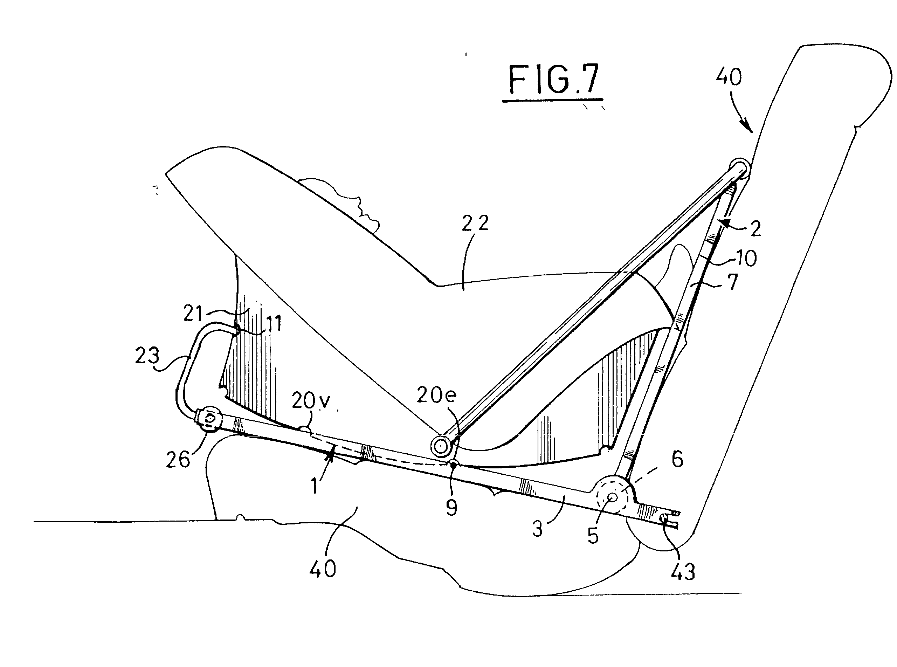

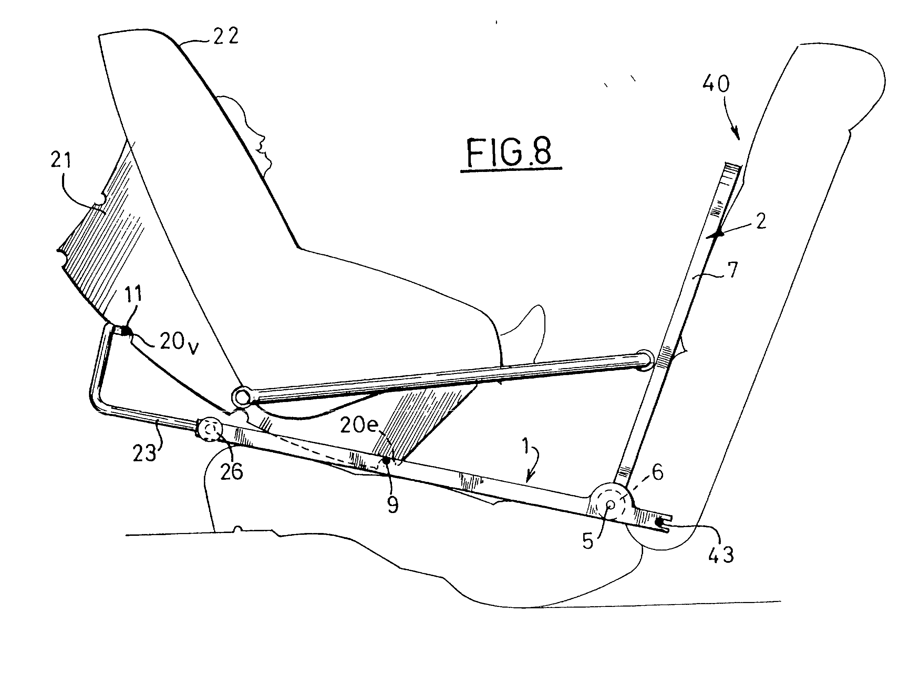

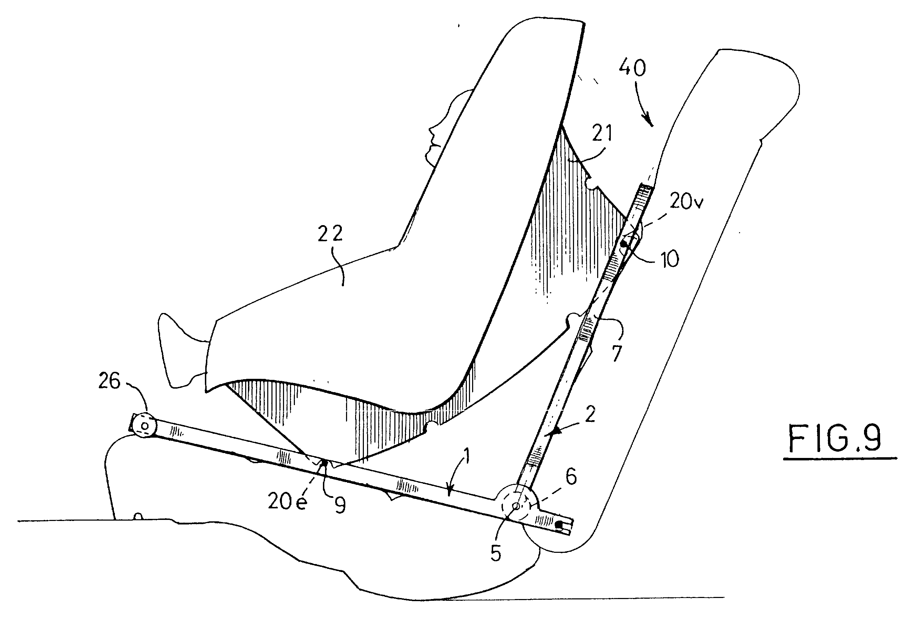

Les figures 7, 8, 9 montrent que la fixation du siège 22 est assurée toujours par l'un des verrous 20v des moyens de fixation 20. Cette manière de procéder permet un déverrouillage rapide du siège 22. De manière analogue le déverrouillage rapide du dispositif est obtenu par suite du déverrouillage simultané de deux fourches 42 à l'aide d'un palonnier attelé aux tiges de manoeuvre correspondantes 46.

Sans sortir du cadre de l'invention, la répartition des barreaux de positionnement tels que 9, 10, 11 pourra être modifiée le long des montants 7 ou longerons 3 dans le but d'autoriser la fixation de châssis 21 de réception de sièges 22 différenciés du point de vue de confort et de finition.

## Revendications

1. Dispositif de support d'un siège de passager-enfant qui possède une base d'appui (1) au contact de la surface de charge d'un siège de véhicule automobile et des moyens de retenue d'un module de siège de passager-enfant, caractérisé par le fait que le dispositif de support possède des moyens de verrouillage (41,42) et des moyens de positionnement (9, 10, 11) du siège de passager-enfant, d'une part sur la base d'appui (1) et d'autre part sur une butée de dossier (2), montée à articulation autour d'un axe transversal (5) porté par la base d'appui (1) au voisinage de l'extrémité postérieure de ladite base, à placer au contact du dossier du siège du véhicule.

2. Dispositif de support selon la revendication 1, caractérisé par le fait que l'extrémité de la base d'appui porte un ensemble de verrouillage à verrou mobile (41) de blocage d'une fourche (42) au contact d'un support d'accrochage (43).

3. Dispositif de support selon l'une quelconque des revendications 1 à 2, caractérisé par le fait que la base d'appui (1) et la butée de dossier (2) portent des barreaux de retenue (9, 10) d'organes de fixation (20) solidaires du siège de passager-enfant (22).

4. Dispositif de support selon l'une quelconque des revendications 1 à 3, caractérisé par le fait que l'extrémité extérieure de la base d'appui (1) porte un moyen de butée (23) ajustable d'un châssis porteur (21) du siège de passager-enfant (22).

5. Dispositif de support selon la revendication 4, caractérisé par le fait que le moyen de butée (23) est constitué par un élément tubulaire comportant une barre de préhension (25) et un barreau de retenue (11) d'éléments de fixation portés par le châssis porteur (21) du siège de passager-enfant (22).

6. Dispositif de support selon l'une quelconque des revendications 3 à 5, caractérisé par le fait qu'au moins deux barreaux de retenue (9, 10, 11) respectivement portés par la butée du dossier (2) et/ou la base d'appui (1) sont combinés avec des éléments de fixation (20) solidaires du siège de passager-enfant (22) en correspondance avec des orientations dudit siège de passager-enfant en fonction de l'âge de l'utilisateur dudit siège.
